# EUROPEAN PATENT APPLICATION

(11) **EP 2 628 913 A1**
(43) Date of publication of application: **21.08.2013**
(21) Application number: 11832631.3
(22) Date of filing: 14.10.2011
(51) Int. Cl.: F01N 3/24, F01N 3/08, F01N 3/20, F02B 37/00

(54) **MARITIME EXHAUST GAS DENITRATION DEVICE**

(30) Priority: 14.10.2010 JP 2010231822
(71) Applicant: Mitsubishi Heavy Industries, Ltd., Tokyo 108-8215 (JP); Oshima Shipbuilding Co. Ltd., Nagasaki 857-2494 (JP); Sakai Chemical Industry Co., Ltd., Sakai-shi, Osaka 590-8502 (JP); Japan Marine Equipment Association, Tokyo 105-0001 (JP)
(72) Inventor: HIRAOKA, Naohiro, Tokyo 108-8215 (JP); NOCHI, Katsumi, Tokyo 108-8215 (JP); NONAKA, Tsuyoshi, Tokyo 108-8215 (JP); MISAWA, Keisuke, Tokyo 100-0006 (JP); NONAKA, Shinji, Saikai-shi Nagasaki 857-2494 (JP); MASATSUGU, Mitsuru, Sakai-shi Osaka 590-8502 (JP); NOJIMA, Ryoichi, Sakai-shi Osaka 590-8502 (JP); KITAMURA, Shoichi, Tokyo 105-0001 (JP)
(74) Representative: HOFFMANN EITLE
(86) International application number: PCT/JP2011/073706
(87) International publication number: WO 2012/050202

(57) **Abstract**

Provided is a marine-exhaust-gas denitration device with which the fuel consumption by heating means can be suppressed, and the running cost can be reduced. Included are a reducing-agent storage tank (11) that stores a reducing agent; a reducing-agent injection nozzle (13) from which the reducing agent stored in the reducing-agent storage tank (11) is jetted into the exhaust gas; a denitration reactor (14) provided with a catalyst that reduces the nitrogen oxides contained in the exhaust gas; heating means (15), provided on the upstream side of the denitration reactor (14), for increasing the temperature of the exhaust gas to be supplied to the denitration reactor (14); and a control device (16) having functions for activating the heating means (15) when the performance of the denitration reactor (14) drops below a predetermined level to increase the temperature of the exhaust gas to be supplied to the denitration reactor (14) and for stopping the heating means (15) when the performance of the denitration reactor (14) subsequently exceeds the predetermined level to stop an increase in the temperature of the exhaust gas to be supplied to the denitration reactor (14).

## Description

### {Technical Field}

The present invention relates to a marine-exhaust-gas denitration device that removes nitrogen oxides from exhaust gas exhausted from, for example, a two-cycle low-speed diesel engine employed as a main engine in a ship.

### {Background Art}

With the increasing interest in environmental protection in recent years, there is a need to reduce nitrogen oxides (hereinafter, referred to as "NOx") contained in exhaust gas exhausted from, for example, a two-cycle low-speed diesel engine employed as a main engine in a ship. In order to reduce NOx, in a generally known method, the exhaust gas from a diesel engine is made to pass through a denitration catalyst (for example, see Patent Literature 1).
Here, catalysts generally employed as denitration catalysts are based on the selective catalytic reduction method (SCR method) in which reduction of nitrogen is performed by using ammonia or the like as a reducing agent.

### {Citation List}

### {Patent Literature}

{PTL 1} Japanese Examined Patent Application, Publication No. Hei 7-6380

### {Summary of Invention}

### {Technical Problem}

In the case in which a two-cycle low-speed diesel engine like the one described above is provided with a turbocharger, the temperature of exhaust gas exhausted from the turbocharger is 300 °C or lower.
In general, it is preferable that the NOx reduction reaction in the denitration catalyst be performed at a range of temperature 300 °C to 320 °C or higher, and passing exhaust gas having a lower temperature than this through the denitration catalyst is considered to cause the denitration catalyst to deteriorate in a short period of time, lowering the NOx reduction effect.

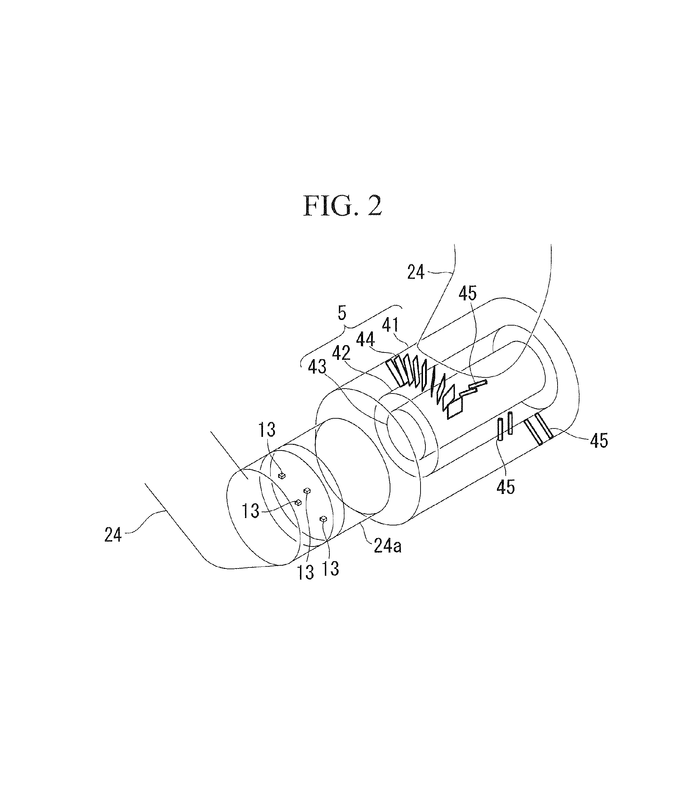

To solve such problems, as shown in Fig. 2 in Patent Literature 1 described above, there is a known method in which the denitration catalyst is disposed between the two-cycle low-speed diesel engine and the turbocharger; in other words, a denitration reactor is disposed on the upstream side of the turbocharger inlet, and high-temperature exhaust gas is introduced into the denitration reactor before the temperature thereof decreases.

However, in the case in which the denitration reactor is disposed on the upstream side of the turbocharger inlet, because the denitration reactor has heat capacity and acts as a buffer portion, when the load transiently fluctuates during start-up, shut-down, or the like of a marine diesel engine, there is a problem in that the rotational speed of the turbocharger does not follow the load fluctuations, or lags behind.

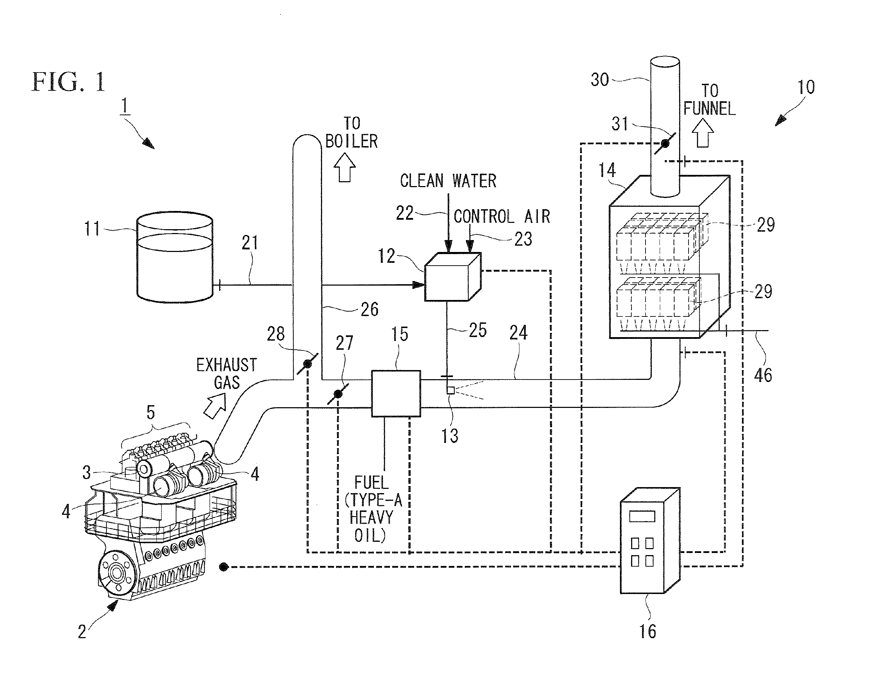

On the other hand, as shown in Fig. 1 in Patent Literature 1 described above, there is also a conceivable method in which a denitration reactor is disposed on the downstream side of the turbocharger, a burner unit (exhaust-gas heating device, i.e., heating means) that combusts fuel is also disposed between the turbocharger and the denitration reactor, and thus, the temperature of the exhaust gas to be introduced into the denitration reactor is increased.
However, with a conventional burner unit, combustion air and fuel are constantly supplied thereto in order to maintain the exhaust-gas temperature at a temperature higher than 300 °C to 320 °C, so that the exhaust gas supplied from the turbocharger to the denitration reactor is constantly increased in temperature (heated). Because of this, there is a problem in that the fuel consumption of the burner unit is increased, and the running cost is increased.

The present invention has been conceived in order to solve the above-described problems, and an object thereof is to provide a ship-exhaust-gas denitration device, with which fuel consumption by heating means can be suppressed and the running cost can be reduced.

### {Solution to Problem}

In order to achieve the above-described object, the present invention employs the following solutions.
A ship-exhaust-gas denitration device according to an aspect of the present invention is a ship-exhaust-gas denitration device in which reduction of nitrogen oxide contained in exhaust gas that has been exhausted from a marine diesel engine and that has driven a turbocharger is performed, including a reducing-agent storage tank that stores a reducing agent; a reducing-agent injection nozzle from which the reducing agent stored in the reducing-agent storage tank is jetted into the exhaust gas; a denitration reactor provided with a catalyst that reduces the nitrogen oxide contained in the exhaust gas; heating means, provided on the upstream side of the denitration reactor, for increasing the temperature of the exhaust gas to be supplied to the denitration reactor; and a control device having functions for activating the heating means when the performance of the denitration reactor drops below a predetermined level to increase the temperature of the exhaust gas to be supplied to the denitration reactor and for stopping the heating means when the performance of the denitration reactor subsequently exceeds the predetermined level to stop an increase in the temperature of the exhaust gas to be supplied to the denitration reactor.

With the above-described ship-exhaust-gas denitration device, the heating means is activated only when the performance of the denitration reactor drops below the predetermined level to increase the temperature of the exhaust gas to be supplied to the denitration reactor, and the heating means is stopped when the performance of the denitration reactor is subsequently restored (recovers) and the predetermined level is exceeded, thus, stopping an increase in the temperature of the exhaust gas to be supplied to the denitration reactor.
By doing so, the fuel consumption by the heating means can be suppressed, and the running cost can be reduced.
With the above-described ship-exhaust-gas denitration device, the denitration reactor is disposed on the downstream side of the turbocharger, and the heating means for combusting fuel is also disposed between the turbocharger and the denitration reactor.
By doing so, even when the load transiently fluctuates during start-up, shut-down, or the like of the marine diesel engine, the rotational speed of the turbocharger can be made to follow the load fluctuations or can be made not to lag behind.

In the ship-exhaust-gas denitration device described above, it is more preferable that spiraling-force imparting means for imparting a spiraling force to the exhaust gas that has flowed into the heating means be provided in the heating means.

With such a ship-exhaust-gas denitration device, because the spiraling force is imparted to the exhaust gas that has flowed into the heating means and the exhaust gas travels downstream while spiraling, the exhaust gas and the reducing agent jetted into the exhaust gas from the reducing-agent injection nozzles can be mixed uniformly in a short distance, and thus, the NOx reduction reaction in the denitration reactor can be promoted.

In the ship-exhaust-gas denitration device described above, it is more preferable that a dust remover that captures a particulate substance in the exhaust gas be provided on the upstream side of the denitration reactor.

With such a ship-exhaust-gas denitration device, the inflow of particulate substances in the exhaust gas into the denitration reactor can be suppressed (reduced), the rate of deterioration of the denitration reactor can be reduced, the regeneration intervals of the denitration reactor can be extended, and the fuel consumption by the heating means can be suppressed further.

A ship according to the present invention is equipped with any one of the ship-exhaust-gas denitration devices described above.

Because the above-described ship is equipped with the ship-exhaust-gas denitration device, with which fuel consumption by the heating means can be suppressed and the running cost can be reduced, fuel consumption of the ship as a whole can be suppressed, and the running cost of the ship as a whole can be reduced.
Because the above-described ship is equipped with the ship-exhaust-gas denitration device, with which, even when the load transiently fluctuates during start-up, shut-down, or the like of the marine diesel engine, the rotational speed of the turbocharger can be made to follow the load fluctuations or can be made not to lag behind, it is possible to configure the ship so as to prevent a loss of (so as not to inhibit) the controllability (maneuverability) thereof.

A method of operating a ship-exhaust-gas denitration device according to the present invention is a method of operating a ship-exhaust-gas denitration device in which reduction of nitrogen oxide contained in exhaust gas that has been exhausted from a marine diesel engine and that has driven a turbocharger is performed, and which is equipped with a reducing-agent storage tank that stores a reducing agent a reducing-agent injection nozzle from which the reducing agent stored in the reducing-agent storage tank is jetted into the exhaust gas; a denitration reactor provided with a catalyst that reduces the nitrogen oxide contained in the exhaust gas; and heating means, provided on the upstream side of the denitration reactor, for increasing the temperature of the exhaust gas to be supplied to the denitration reactor; the method including activating the heating means when the performance of the denitration reactor drops below a predetermined level to increase the temperature of the exhaust gas to be supplied to the denitration reactor; and stopping the heating means when the performance of the denitration reactor subsequently exceeds the predetermined level to stop an increase in the temperature of the exhaust gas to be supplied to the denitration reactor.

With the method of operating the ship-exhaust-gas denitration device described above, the heating means is activated only when the performance of the denitration reactor drops below the predetermined level to increase the temperature of the exhaust gas to be supplied to the denitration reactor, and the heating means is stopped when the performance of the denitration reactor is subsequently restored (recovers) and the predetermined level is exceeded, thus, stopping an increase in the temperature of the exhaust gas to be supplied to the denitration reactor.
By doing so, the fuel consumption by the heating means can be suppressed, and the running cost can be reduced.

### {Advantageous Effects of Invention}

A ship-exhaust-gas denitration device according to the present invention affords an advantage in that fuel consumption by heating means can be suppressed, and the running cost can be reduced.

### {Brief Description of Drawings}

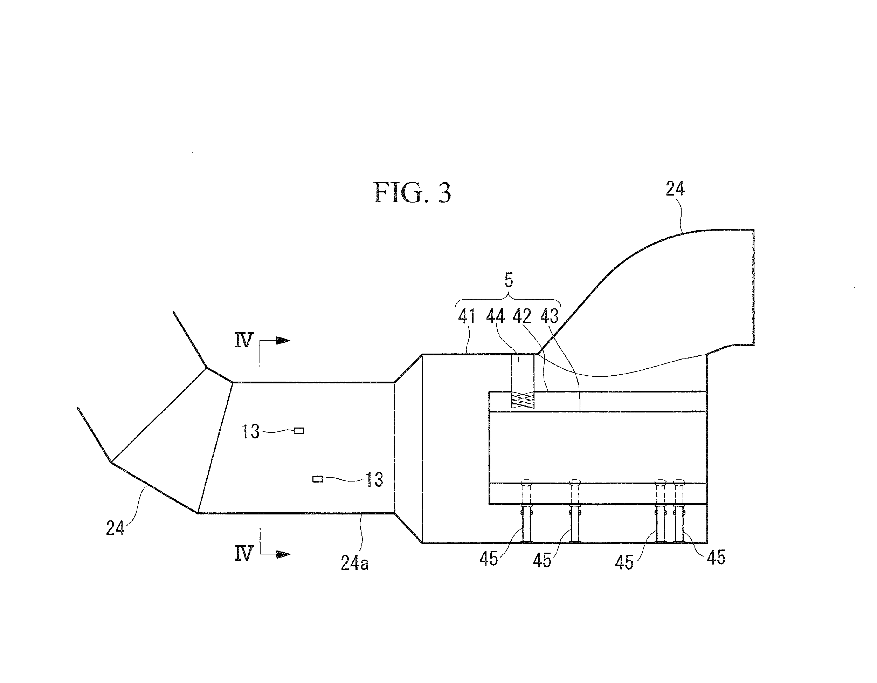

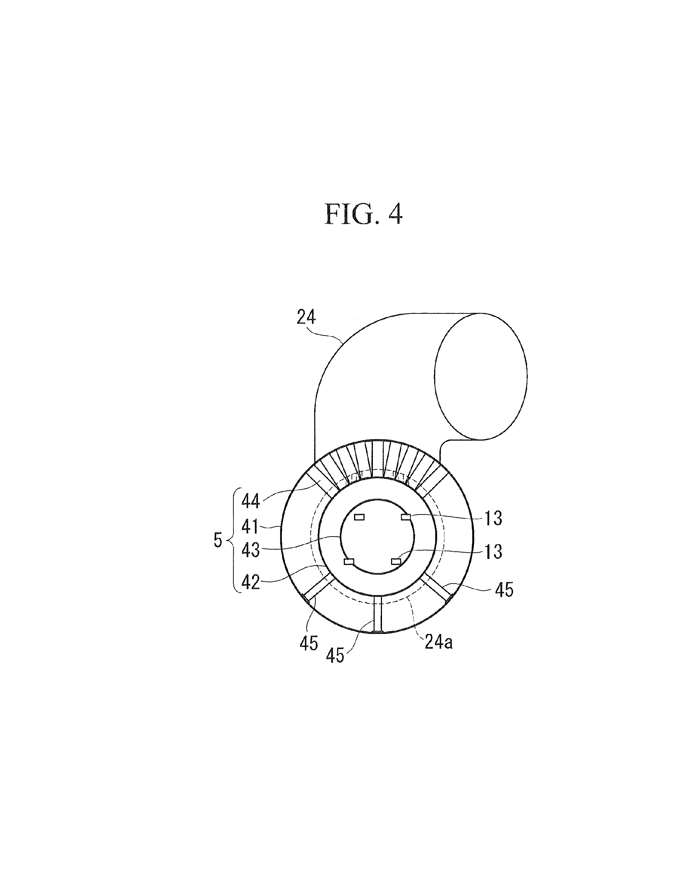

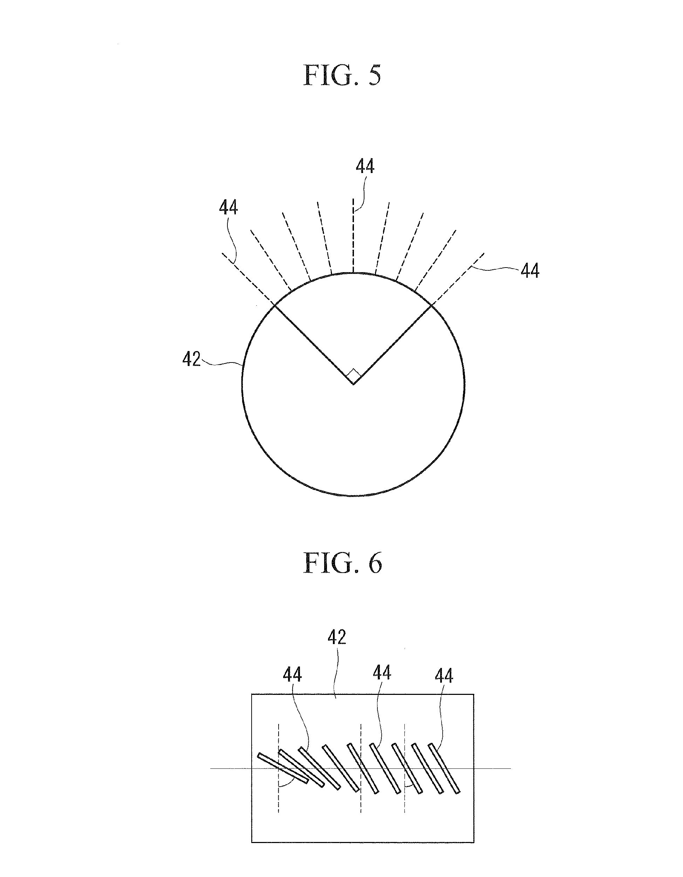

{Fig. 1} Fig. 1 is a diagram showing, in outline, the configuration of a ship equipped with a ship-exhaust-gas denitration device according to an embodiment of the present invention.
{Fig. 2} Fig. 2 is a diagram showing the configuration of a burner unit and the vicinity of the burner unit shown in Fig. 1.
{Fig. 3} Fig. 3 is a diagram showing the configuration of the burner unit and the vicinity of the burner unit shown in Fig. 1.
{Fig. 4} Fig. 4 is a sectional view taken along arrows IV-IV in Fig. 3.
{Fig. 5} Fig. 5 is a diagram in which an inner cylinder and vanes shown in Figs. 2 to 4 are viewed from the downstream side along the longitudinal direction (axial direction).
{Fig. 6} Fig. 6 is a diagram in which Fig. 5 is viewed from the top side (a side from which exhaust gas that has flowed through a flue positioned on the upstream side flows in).

### {Description of Embodiment}

A ship-exhaust-gas denitration device according to an embodiment of the present invention will be described below with reference to Figs. 1 to 6.
Fig. 1 is a diagram showing, in outline, the configuration of a ship equipped with a ship-exhaust-gas denitration device according to this embodiment, Figs. 2 and 3 are diagrams showing the configuration of a burner unit and the vicinity of the burner unit shown in Fig. 1, Fig. 4 is a sectional view taken along arrows IV-IV in Fig. 3, Fig. 5 is a diagram in which an inner cylinder and vanes shown in Figs. 2 to 4 are viewed from the downstream side along the longitudinal direction (axial direction), and Fig. 6 is a diagram in which Fig. 5 is viewed from the top side (a side from which exhaust gas that has flowed through a flue positioned on the upstream side flows in).

A ship 1 according to this embodiment is provided with a marine diesel engine 2 and a ship-exhaust-gas denitration device 10.
A specific example of the marine diesel engine 2 includes, for example, a two-cycle low-speed diesel engine that is provided with cylinder portions (not shown), an exhaust receiver (an exhaust collection pipe, i.e., an exhaust manifold) 3, and a turbocharger 4 and that is employed as a main engine in the ship 1.
Pistons (not shown) connected to a crank shaft (not shown) are disposed inside the individual cylinder portions. In addition, exhaust ports (not shown) of the individual cylinder portions communicate with (are connected to) the exhaust receiver 3 via exhaust pipes (not shown), and, at openings for the cylinders in the individual exhaust pipes, exhaust valves 5 that open and close the openings are disposed.

The ship-exhaust-gas denitration device 10 is provided with a reducing-agent storage tank 11, a reducing-agent supply device 12, reducing-agent injection nozzles 13, a denitration reactor 14, a burner unit (a temperature-increasing unit, i.e., heating means) 15, and a control device 16.
A reducing agent ("ammonia solution or urea solution" in this embodiment) is stored in the reducing-agent storage tank 11. In addition, the reducing-agent storage tank 11 and the reducing-agent supply device 12 are communicated (connected) via a (first) reducing-agent supply pipe 21 so that the reducing agent is supplied from the reducing-agent storage tank 11 to the reducing-agent supply device 12 from time to time as needed.

A flesh-water supply pipe 22 and an air supply pipe 23 are connected to the reducing-agent supply device 12; flesh water is supplied, from time to time as needed, from a flesh-water tank (not shown) provided at the bottom of the ship 1 to the reducing-agent supply device 12; and control air is supplied from an air tank (not shown) provided in the ship 1 to the reducing-agent supply device 12.
The reducing-agent injection nozzles 13 are provided in a (first) flue (exhaust pipe) 24 that communicates (connects) the turbocharger 4 and the denitration reactor 14. In addition, the reducing-agent injection nozzles 13 and the reducing-agent supply device 12 are communicated (connected) via a (second) reducing-agent supply pipe 25 so that the reducing agent is supplied from the reducing-agent supply device 12 from time to time as needed. Then, the reducing agent is supplied (the reducing agent is sprayed) into the flue 24 from the reducing-agent injection nozzles 13 in the form of a mist.

The amount of flesh water and the amount of control air to be supplied to the reducing-agent supply device 12 and the amount of reducing agent to be supplied to the reducing-agent injection nozzles 13 are controlled by the control device 16.
Because a branch pipe 26 that guides the exhaust gas (combustion gas) that has passed through the turbocharger 4 to a (exhaust-heat recovery) boiler (not shown) is connected to the flue 24 positioned on the upstream side of the location (portion) where the burner unit 15 is provided (disposed), the ship can be operated even in the unlikely event of the denitration reactor malfunctioning.
On the downstream side of a joining portion (branching portion) between the flue 24 and the branch pipe 26, a (first) flow-rate adjusting valve 27 whose degree of opening is adjusted by the control device 16 is provided in the flue 24, at a position on the upstream side of the burner unit 15, and a (second) flow-rate adjusting valve 28 whose degree of opening is adjusted by the control device 16 is provided in the branch pipe 26, at a position in the vicinity of the joining portion (branching portion) between the flue 24 and the branch pipe 26.

In the interior of the denitration reactor 14, a plurality of catalysts 29 that have, for example, a cuboid shape in an external view and that also have a honeycomb (bee-hive) structure are provided (disposed), and, when the exhaust gas passes (blows) through these catalysts 29, NOx is decomposed into nitrogen and water, thus removing NOx in the exhaust gas. Then, the exhaust gas from which NOx has been removed is guided to a funnel via a (second) flue (exhaust pipe) 30 that communicates (connects) the denitration reactor 14 and the funnel (not shown) so as to be exhausted into the atmosphere from the funnel.
A (third) flow-rate adjusting valve 31 whose degree of opening is adjusted by the control device 16 is provided in the flue 30.

Next, the burner unit 15 will be described by using Figs. 2 to 6.
As shown in at least one drawing among Figs. 2 to 6, the burner unit 15 is provided with an outer cylinder 41, an inner cylinder 42, a combustion cylinder (burner cylinder) 43, nozzles (not shown), and vanes (spiraling-force imparting means) 44.
The outer cylinder 41 is a cylindrical member having a columnar shape in an external view, and the flue 24 positioned on the upstream side is connected to (joined with) the outer circumferential surface thereof so that the exhaust gas that has flowed through the flue 24 positioned on the upstream side is directed in the axial direction (longitudinal-direction axial line, i.e., center axial line) of the exhaust-gas pipe, while the exhaust gas spirals along the inner-cylinder outer circumference of the outer cylinder 41 and so as also to be directed toward the downstream side of the outer cylinder 41. In addition, the flue 24 positioned on the downstream side is connected to (joined with) a center portion of an end surface provided at the downstream end of the outer cylinder 41, so that the longitudinal-direction axial line (center axial line) of the flue 24 positioned on the downstream side is positioned on the longitudinal-direction axial line (center axial line) of the outer cylinder 41.

The inner cylinder 42 is a cylindrical member having a columnar shape in an external view, whose length in the longitudinal direction (axial direction) is shorter than that of the outer cylinder 41, whose the longitudinal-direction axial line (center axial line) thereof is positioned on the longitudinal-direction axial line (center axial line) of the outer cylinder 41, and which is disposed inside the outer cylinder 41 so that one end thereof is in contact with a center portion of an end surface provided at the upstream end of the outer cylinder 41. The inner cylinder 42 is supported in the outer cylinder 41 by means of a plurality of (nine in this embodiment) vanes 44 that are disposed in a radiating manner on a side from which the exhaust gas that has flowed through the flue 24 positioned on the upstream side flows in and is also supported in the outer cylinder 41 by means of a plurality of (twelve (3×4) in this embodiment) circular-rod stays (stays) 45 that are disposed in a radiating manner on the opposite side from the side from which the exhaust gas that has flowed through the flue 24 positioned on the upstream side flows in.

The stays 45 are rod (for example, circular rod) members and are disposed between the outer cylinder 41 and the inner cylinder 42 so that one ends thereof (ends positioned on radially outer side) are in contact with the inner circumferential surface of the outer cylinder 41, so that the other ends thereof (ends positioned on radially inner side) are in contact with the outer circumferential surface of the inner cylinder 42, and so that, as shown in Fig. 4, the center-to-center spacings (pitches) between adjacent stays 45 in the circumferential direction become equal within a 50-degree center angle range.
Only six (3×2) stays 45 positioned on the upstream side are shown in Fig. 2.

In the case in which a burner is used as the heating means and is connected to the inner cylinder 42, a high-temperature combustion gas is generated by a burner combustor (not shown) and, by means of the high-temperature gas passing through the inner cylinder 42 and flowing into the outer cylinder 41, the exhaust gas supplied from the turbocharger 5 to the denitration reactor 14 is increased in temperature (heated), thus using (utilizing) the high-temperature gas to increase the temperature of the exhaust gas.

The vanes 44 are, for example, thin, flat plates having a rectangular shape in plan view and are disposed between the outer cylinder 41 and the inner cylinder 42 in one row along the circumferential direction so that one end thereof (end positioned on radially outer side) is in contact with the inner circumferential surface of the outer cylinder 41 and the other end thereof (end positioned on radially inner side) is in contact with the outer circumferential surface of the inner cylinder 42. As shown in Fig. 5 in which the inner cylinder 42 and the vanes 44 are viewed from the downstream side along the longitudinal direction (axial direction), the vanes 44 are disposed so that the center-to-center spacings (pitches) between adjacent vanes 44 become equal within a 90-degree center angle range, and also so that, as shown in Fig. 6 in which Fig. 5 is viewed from the top side (the side from which the exhaust gas that has flowed through the flue 24 positioned on the upstream side flows in), the angle formed by the vane 44 at the left-most position when viewed from the top side and the longitudinal-direction axial line (center axial line) is 60 degrees and the angles formed by the five vanes 44 at the right-most positions and the longitudinal-direction axial line (center axial line) are 30 degrees. Then, when the inner cylinder 42 and the vanes 44 are viewed from the downstream side along the longitudinal direction (axial direction), these vanes 44 impart a right-hand-twisting (clockwise) spiraling force (a spiraling force that rotates in the left-hand-twisting direction in the traveling direction (downstream side)) to the exhaust gas that has flowed into the space between the outer cylinder 41 and the inner cylinder 42 from the flue 24 positioned on the upstream side, and thus, the exhaust gas flows into the flue 24 positioned on the downstream side while spiraling.

As shown in Figs. 2 and 3, in a sectional view of a straight-pipe portion (short-pipe portion) 24a of the flue 24, the reducing-agent injection nozzles 13 are disposed at substantially uniform positions in the straight-pipe portion 24a so that mixing after spraying of the reducing agent is promoted.

In addition to having functions for adjusting (controlling) the amount of flesh water and the amount of control air to be supplied to the reducing-agent supply device 12, the amount of reducing agent to be supplied to the reducing-agent injection nozzles 13, the degree of opening of the (first) flow-rate adjusting valve 27, the degree of opening of the (second) flow-rate adjusting valve 28, and the degree of opening of the (third) flow-rate adjusting valve 31, the control device 16 has a function for causing combustion air and fuel to be jetted into the interior of the combustion cylinder 43 from the nozzles of the burner unit 15 to generate flames inside the combustion cylinder 43, thus increasing the temperature of (heating) the exhaust gas to be supplied to the denitration reactor 14 from the turbocharger 4. Specifically, the control device 16 has a function for causing combustion air and fuel to be jetted into the interior of the combustion cylinder 43 from the nozzles of the burner unit 15 to generate flames inside the combustion cylinder 43, thus increasing the temperature of (heating) the exhaust gas to be supplied to the denitration reactor 14 from the turbocharger 4, when the ship-exhaust-gas denitration device 10 is operated in a state in which the burner unit 15 is not activated and the performance of the denitration reactor 14 decreases (drops below a predetermined level), for example, when a measured NOx value of the exhaust gas that passes through the flue 30 exceeds a set value, and, the control device 16 also has a function for stopping jetting of combustion air and fuel into the interior of the combustion cylinder 43 from the nozzles of the burner unit 15 so that flames are not generated inside the combustion cylinder 43, thus stopping an increase in the temperature of (heating of) the exhaust gas to be supplied to the denitration reactor 14 from the turbocharger 5, when the performance of the denitration reactor 14 subsequently recovers (is restored) (exceeds the predetermined level), for example, when a measured NOx value of the exhaust gas that passes through the flue 30 drops below the set value.

Reference sign 46 in Fig. 1 indicates a soot blowing device that blows away (removes) soot, dust, PM (particulate matter, i.e., particulate substances in exhaust gas) or the like that have adhered to the catalysts 29 by spraying compressed air supplied from an air tank (not shown) provided in the ship 1 or steam supplied from a boiler (not shown) provided in the ship 1.

With the ship-exhaust-gas denitration device 10 and the method of operating the ship-exhaust-gas denitration device 10 according to this embodiment, the burner unit 15 is activated only when the performance of the denitration reactor 14 drops below the predetermined level to increase the temperature of the exhaust gas to be supplied to the denitration reactor 14, and the burner unit 15 is stopped when the performance of the denitration reactor 14 is subsequently restored (recovers) and the predetermined level is exceeded, thus, stopping an increase in the temperature of the exhaust gas to be supplied to the denitration reactor 14.
By doing so, the fuel consumption by the burner unit 15 can be suppressed, and the running cost can be reduced.
With the ship-exhaust-gas denitration device 10 according to this embodiment, the denitration reactor 14 is disposed on the downstream side of the turbocharger 4, and, also, the burner unit 15 that combusts fuel is disposed between the turbocharger 4 and the denitration reactor 14.
By doing so, even when the load transiently fluctuates during start-up, shut-down, or the like of the marine diesel engine 2, the rotational speed of the turbocharger 4 can be made to follow the load fluctuations or can be made not to lag behind.

With the ship-exhaust-gas denitration device 10 according to this embodiment, because the spiraling force is imparted to the exhaust gas that has flowed into the burner unit 15 by means of the vanes 44 that impart the spiraling force to the exhaust gas that has flowed into the burner unit 15, and the exhaust gas travels toward the downstream while spiraling, the exhaust gas and the reducing agent jetted into the exhaust gas from the reducing-agent injection nozzles 13 can be mixed substantially uniformly in a short distance (in the straight-pipe portion (short-pipe portion) 24a of the flue 24 in this embodiment), the NOx reduction reaction in the denitration reactor 14 can be stabilized, and the system can be constructed in a limited space in the ship 1.

On the other hand, because the ship 1 according to this embodiment is equipped with the ship-exhaust-gas denitration device 10, with which fuel consumption by the burner unit 15 can be suppressed and the running cost can be reduced, fuel consumption of the ship 1 as a whole can be suppressed, and the running cost of the ship 1 as a whole can be reduced.
Because the ship 1 according to this embodiment is equipped with the ship-exhaust-gas denitration device 10, with which, even when load transiently fluctuates during start-up, shut-down, or the like of the marine diesel engine 2, the rotational speed of the turbocharger 4 can be made to follow the load fluctuations or can be made not to lag behind, it is possible to configure the ship 1 so as to prevent a loss of (so as not to inhibit) the ease of navigation (maneuverability) thereof.

The present invention is not limited to the embodiment described above, and appropriate modifications and alterations can be incorporated as needed.
For example, in the embodiment described above, combustion air and fuel are jetted into the interior of the combustion cylinder 43 from the nozzles of the burner unit 15 to generate flames inside the combustion cylinder 43, thus increasing the temperature of (heating) the exhaust gas to be supplied to the denitration reactor 14 from the turbocharger 5, when the ship-exhaust-gas denitration device 10 is operated in a state in which the burner unit 15 is not activated and the performance of the denitration reactor 14 decreases (drops below the predetermined level), for example, when a measured NOx value of the exhaust gas that passes through the flue 30 exceeds the set value, and the jetting of the combustion air and the fuel into the interior of the combustion cylinder 43 from the nozzles of the burner unit 15 is stopped so that flames are not generated inside the combustion cylinder 43, thus stopping an increase in the temperature of (heating of) the exhaust gas to be supplied to the denitration reactor 14 from the turbocharger 5, when the performance of the denitration reactor 14 subsequently recovers (is restored) (exceeds the predetermined level), for example, when a measured NOx value of the exhaust gas that passes through the flue 30 drops below the set value.
However, the ship-exhaust-gas denitration device 10 according to the embodiment of the present invention is not limited to such an operation (running) method; when navigating in a marine engine-exhaust-gas regulation zone (ECA: Emission Control Area), the exhaust gas may be constantly increased in temperature (heated) by using (activating) the burner unit 15; and when navigating outside the marine engine-exhaust-gas regulation zone, combustion air and fuel may be jetted into the interior of the combustion cylinder 43 from the nozzles of the burner unit 15 to generate flames inside the combustion cylinder 43, thus increasing the temperature of (heating) the exhaust gas to be supplied to the denitration reactor 14 from the turbocharger 5, when the performance of the denitration reactor 14 decreases (drops below the predetermined level) (for example, when a measured NOx value of the exhaust gas that passes through the flue 30 exceeds the set value), and, in the case in which the performance of the denitration reactor 14 subsequently recovers (is restored) (exceeds the predetermined level) (for example, when a measured NOx value of the exhaust gas that passes through the flue 30 drops below the set value), the jetting of the combustion air and the fuel into the interior of the combustion cylinder 43 from the nozzles of the burner unit 15 may be stopped so that flames are not generated inside the combustion cylinder 43, thus stopping an increase in the temperature of (heating of) the exhaust gas to be supplied to the denitration reactor 14 from the turbocharger 5.
By doing so, NOx in the exhaust gas can reliably be removed in a marine engine-exhaust-gas regulation zone, and the NOx concentration in the exhaust gas can be kept below the regulation value.

In the above-described embodiment, it is more preferable that a dust remover (dust collector), such as an EP (Electrostatic Precipitator), a DPF (Diesel Particulate Filter), or the like, that captures PM (Particulate Matter), that is, particulate substances in the exhaust gas, be provided in the flue 24 positioned on the upstream side (in the vicinity) of the denitration reactor 14.
By disposing a dust remover in the flue 24 positioned on the upstream side (preferably, on the upstream side in the vicinity) of the denitration reactor 14 in this way, the inflow of PM into the denitration reactor 14 can be suppressed (reduced), the rate of deterioration of the denitration reactor 14 can be reduced, the regeneration intervals of the denitration reactor 14 can be extended, and the fuel consumption by the burner unit 15 can be suppressed.

### {Reference Signs List}

- 1: ship
- 2: marine diesel engine
- 4: turbocharger
- 10: ship-exhaust-gas denitration device
- 11: reducing-agent storage tank
- 13: reducing-agent injection nozzle
- 14: denitration reactor
- 15: burner unit (heating means)
- 16: control device
- 29: catalyst
- 44: vane (spiraling-force imparting means)

## Claims

1. A marine-exhaust-gas denitration device, in which reduction of nitrogen oxide contained in exhaust gas that has been exhausted from a marine diesel engine and that has driven a turbocharger is performed, comprising:
a reducing-agent storage tank that stores a reducing agent;
a reducing-agent injection nozzle from which the reducing agent stored in the reducing-agent storage tank is jetted into the exhaust gas;
a denitration reactor provided with a catalyst that reduces the nitrogen oxide contained in the exhaust gas;
heating means, provided on the upstream side of the denitration reactor, for increasing the temperature of the exhaust gas to be supplied to the denitration reactor; and
a control device having functions for activating the heating means when the performance of the denitration reactor drops below a predetermined level to increase the temperature of the exhaust gas to be supplied to the denitration reactor and for stopping the heating means when the performance of the denitration reactor subsequently exceeds the predetermined level to stop an increase in the temperature of the exhaust gas to be supplied to the denitration reactor.

2. The marine-exhaust-gas denitration device according to Claim 1, wherein spiraling-force imparting means for imparting a spiraling force to the exhaust gas that has flowed into the heating means is provided in the heating means.

3. The marine-exhaust-gas denitration device according to Claim 1 or 2, wherein a dust remover that captures a particulate substance in the exhaust gas is provided on the upstream side of the denitration reactor.

4. A ship equipped with the marine-exhaust-gas denitration device according to any one of Claims 1 to 3.

5. A method of operating a marine-exhaust-gas denitration device, in which reduction of nitrogen oxide contained in exhaust gas that has been exhausted from a marine diesel engine and that has driven a turbocharger is performed, equipped with
a reducing-agent storage tank that stores a reducing agent;
a reducing-agent injection nozzle from which the reducing agent stored in the reducing-agent storage tank is jetted into the exhaust gas;
a denitration reactor provided with a catalyst that reduces the nitrogen oxide contained in the exhaust gas; and
heating means, provided on the upstream side of the denitration reactor, for increasing the temperature of the exhaust gas to be supplied to the denitration reactor;
the method comprising:
activating the heating means when the performance of the denitration reactor drops below a predetermined level to increase the temperature of the exhaust gas to be supplied to the denitration reactor; and stopping the heating means when the performance of the denitration reactor subsequently exceeds the predetermined level to stop an increase in the temperature of the exhaust gas to be supplied to the denitration reactor.
